# EUROPÄISCHE PATENTSCHRIFT

(11) **EP 0 316 535 B1**
(45) Veröffentlichungstag und Bekanntmachung des Hinweises auf die Patenterteilung: **15.12.1993**
(21) Anmeldenummer: 88115066.8
(22) Anmeldetag: 15.09.1988
(51) Int. Cl.: H02G 1/08

(54) **Zugfeste Verkappung**
Pull-resistant capping
Capuchon résistant à la traction

(30) Priorität: 19.11.1987 DE 3739182
(43) Veröffentlichungstag der Anmeldung: 24.05.1989
(73) Patentinhaber: KABEL RHEYDT Aktiengesellschaft, D-41179 Mönchengladbach (DE)
(72) Erfinder: Delâge, Peter, Dipl.-Ing., D-4053 Jüchen 5 (DE); Lindlar, Rolf, Dipl.-Ing., D-4052 Korschenbroich 4 (DE)
(74) Vertreter: Mende, Eberhard, Dipl.-Ing.

(56) Entgegenhaltungen:
- DE-A- 3 414 611
- DE-A- 3 537 525
- DE-U- 8 211 359

## Beschreibung

Die Erfindung betrifft eine zugfeste Verkappung für ein Kabel nach dem Oberbegriff des Anspruchs 1. Eine solche Verkappung ist aus der DE-OS 34 14 611 bekannt. Dort wird unter Verwendung eines auf das Kabelende aufgebrachten Ziehstrumpfs ein hohlzylindrischer Zuganker auf das zentrale Zugentlastungselement gepreßt. Diese Anordnung wird durch einen Schrumpfschlauch abgedichtet. Sie hat den Nachteil, daß ein mechanisch anzufertigendes Teil benötigt wird, welches für sich allein noch keine Dichtwirkung auf das Kabelende auszuüben vermag.

Aus dem D GbM 82 11 359 ist ein Ziehkopf für ein Koaxialkabel bekannt, welcher einen Zug sowohl auf den inneren Teil als auch über einen Ziehstrumpf auf den äußeren Teil des Kabels überträgt. Diese Anordnung hat den Nachteil, daß zwei Spannmuttern benötigt werden und die Montage nicht reproduzierbar so erfolgen kann, daß der Innenleiter und der Außenleiter als zugfeste Elemente entsprechend ihrer Zugfestigkeit zum Tragen kommen.

Der Erfindung liegt die Aufgabe zugrunde, eine zugfeste Verkappung der eingangs genannten Art so zu gestalten, daß die dem Kabel zumutbare maximale Zugbelastbarkeit auch von der Zugöse an der Verkappung angelegt werden kann. Außerdem soll die Verkappung wasserdicht sein und das Kabel während des Transports zur Baustelle und einer längeren Lagerung im Freien sicher schützen

Die Lösung dieser Aufgabe gelingt durch die im Anspruch 1 gekennzeichneten Merkmale. Vorteilhafte Weiterbildungen sind in den Ansprüchen 2 bis 7 gekennzeichnet. Ein Verfahren zum Herstellen einer zugfesten Verkappung gemäß der Erfindung ist im Anspruch 8 beschrieben.

Eine zugfeste Verkappung soll dafür sorgen, daß ein Kabel einerseits vor Umwelteinflüssen geschützt ist und andererseits mit einer an der Verkappung befindlichen Öse in einen Kabelkanal eingezogen werden kann. Ein besonderes Problem ergibt sich bei den meisten Kabelkonstruktionen allein schon daraus, daß mehrere Arten von Zugentlastungselementen an der Kraftaufnahme beteiligt werden müssen. Gelegentlich kommt es vor, daß ein Ziehstrumpf auf der Manteloberfläche ins Rutschen kommt, da er nicht reproduzierbar auf den Mantel festlegbar ist. Dies führt zu überhöhten Längenänderungen der inneren Kabelteile, die mit der Zugöse in kraftschlüssiger Verbindung stehen.

Obwohl demontierbare Ziehköpfe sich beim Einziehen von Kabeln durchaus bewährt haben, ist ihre Montage für den Fall, daß man die Zugfestigkeit des gesamten Kabels ausnutzen möchte, sehr vom Fingerspitzengefühl des Monteurs abhängig. Infolgedessen wurde bei der Erfindung von einer formschlüssigen Verbindung zwischen den der Zugentlastung dienenden Elementen und der Zugöse Gebrauch gemacht. Um die Zugöse möglichst gleichmäßig mit den verschiedenen Zugentlastungselementen in Verbindung zu bringen, wird, bevor die Aushärtung einsetzt, durch eine Zugbelastung für eine kraftschlüssige Verbindung mit den Zugentlastungselementen des Mantels und der Kabelseele gesorgt. Dadurch ist sichergestellt, daß nach dem Aushärten der Klebermasse einzelne Schichten nicht mehr aufeinander gleiten und somit eine gleichmäßige Übertragung der Zugkräfte entsprechend der Belastbarkeit der einzelnen Zugentlastungselemente verhindert wird.

Die vorliegende Erfindung wird nachstehend anhand der Zeichnung näher erläutert.

Dabei zeigt
- Figur 1: eine Ansicht des Kabelendes mit zwei Absetzstufen,
- Figur 2: das Kabelende mit freigelegtem Zentralelement,
- Figur 3: die Abdichtung der Kabelseele,
- Figur 4: die Anordnung der Zugentlastungselemente nach dem Flechten,
- Figur 5: das Kabelende nach Überziehen des Ziehstrumpfes,
- Figur 6: die Vorbereitung des Kabelendes für den Guß der Klebermasse,
- Figur 7: das für den Ziehvorgang vorbereitete Kabel ohne abschließenden Schrumpfschlauch.

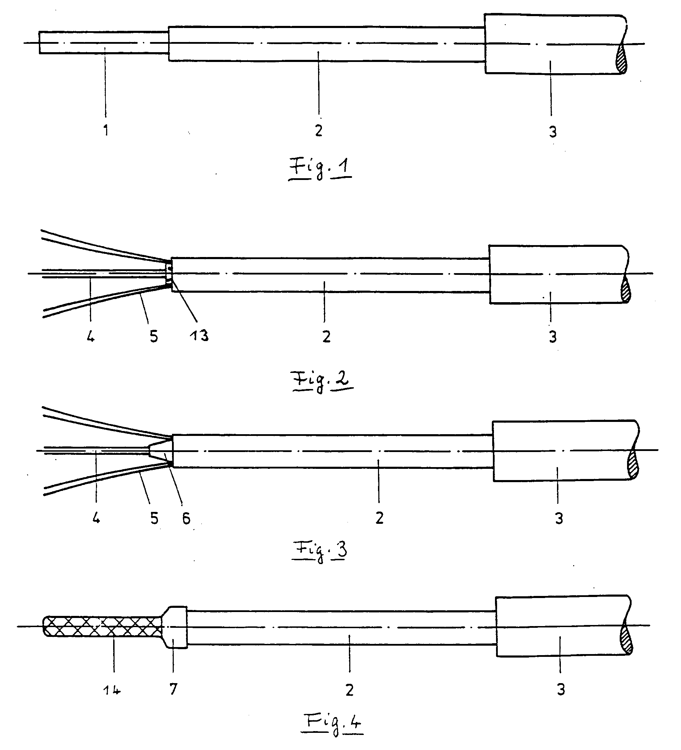

Eine vorteilhafte Ausführungsform der Erfindung besteht darin, daß beispielsweise ein mit einem Bleimantel 2 ausgerüstetes Lichtwellenleiterkabel auf ca. 100 cm bis auf den Bleimantel 2 abgesetzt wird, d. h. daß üblicherweise 100 cm Polyäthylenmantel 3 entfernt werden. Vom Kabelende werden dann noch 40 cm des Bleimantels 2 entfernt (Figur 1). Vom Kabelende werden auf 38 cm Entfernung Lichtwellenleiter-Elemente 13 sowie die Polyäthylen-Aufdickung des Zentralelements 4 entfernt (Figur 2). Figur 3 zeigt, wie die Seele mit selbstvulkanisierendem Klebeband 6 gegen eindringendes Gießharz abgedichtet ist. Die Zugentlastungselemente 5 werden geteilt und im Kreuzschlag um das Zentralelement 4 gewunden und festgelegt, so daß die Anordnung nach Figur 4 entsteht. Außerdem wird der Übergang des Bleimantels 2 zu den Zugentlastungselementen 5 mit selbstvulkanisierendem Klebeband 6 gegen Gießharz abgedichtet.

Die geflochtenen Zugentlastungselemente 5 können noch durch ein zusätzliches Klebeband 14 in zwei gegenläufigen Schichten mit Lücke (für den Kleber) bewickelt werden.

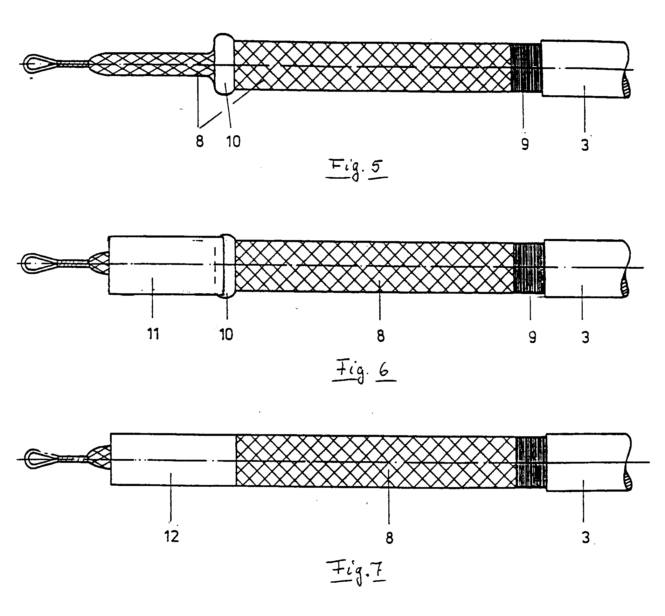

Die benötigten LWL-Adern 13 werden, um auf sie keine Zugspannungen zu übertragen, an der Austrittsstelle, wie in der Fig. 2 dargestellt, abgeschnitten. Die Seilkausche des Ziehstrumpfes 8 wird entfernt und der Ziehstrumpf 8 über die Zugentlastungselemente 5 und den Bleimantel 2 montiert (Figur 5). Im Bereich der Ziehstrumpföffnung des vorderen Bleimantels 2 wird der Ziehstrumpf 8 mit Klebeband 9 auf dem Bleimantel 2 festgelegt und durch Zug am anderen Ende des Ziehstrumpfes vorgespannt.

Von dem entfernten Außenmantel des Kabels wird nun ein etwa 40 cm langes Stück als Gießform 11 bis zum Kittring 10 auf das Kabelende aufgeschoben. Die aufgeschobene Gießform 11, welche selbstverständlich auch in anderer Weise hergestellt werden kann, wird am Kittring 10 abgedichtet. Dann wird eine Zweikomponenten-Vergußmasse nach Gebrauchsanleitung gemischt und am besten bei Raumtemperatur in die Gießform 11 eingefüllt. Vorzugsweise nimmt man eine schnellhärtende Vergußmasse, welche zur weiteren Beschleunigung des Aushärtens auf eine höhere Temperatur erhitzt wird. Gleichzeitig mit dem Vergießen wird der Ziehstrumpf 8 so stramm gezogen, daß er nicht über den Bleimantel 2 rutscht. Nach Einsetzen des Härtungsvorganges ist die Kraft, die auf die Zugöse des Ziehstrumpfs 8 ausgeübt wird, nicht mehr erforderlich. Nach dem Abkühlen kann die Gießform 11 entfernt werden, auf dem Ziehstrumpf 8 verbleibt der Gußkörper 12. Außerdem wird der Kittring 10 entfernt. Der Zuganker wird zum Schluß mittels Schrumpfschlauch auf der gesamten Länge verkappt.

Diese Verkappung wurde an einem Kabel angebracht, welches aus mehreren GFK-Stützelementen von 1,6 mm Durchmesser, 6 LWL-Hohladern, welche zum Bündel verseilt und bebändert sind, einem zentralen GFK-Stützelement von 3,3 mm Durchmesser, sowie drei weiteren LWL-Bündeln von 4,6 mm Durchmesser und zwei perforierten Leerschläuchen, welche um das Zentralelement 4 verseilt und bebändert sind, äußeren Zugentlastungselementen 5 aus Glas oder Aramidrovings und einem diese umgebenden Bleimantel 2 mit einer Wanddicke von 1,5 mm und einem Polyäthylen-Außenmantel 3 mit einer Wanddicke von 2,0 mm besteht.

Dieses Kabel mit einem äußeren Durchmesser von 20 mm wurde mit der zugfesten Verkappung, wie oben beschrieben, versehen und einer Zugkraft von 5.000 N ausgesetzt. Auch nach längerer Zeit waren keine Veränderungen am Kabelende festzustellen und somit der Zugversuch erfolgreich durchgeführt. Eine Verlegung ist im Temperaturbereich von - 5°C bis + 50°C möglich. Dabei ist zu beachten, daß der Durchmesser der Verkappung nur in Folge des äußeren Schrumpfschlauches etwas über dem Nominaldurchmesser des Kabels liegt. Setzt man den äußeren Kabelmantel noch vor Aufziehen des Schrumpfschlauches weiter ab, und zwar genau um die Dicke des Schrumpfschlauches, so wird der Durchmesser des Kabels an keiner Stelle der Verkappung überschritten und damit das Einziehen des Kabels besonders vorteilhaft ermöglicht.

## Patentansprüche

1. Zugfeste Verkappung für ein Kabel mit einer Kabelseele (1) mit einem zugfesten Zentralelement (4) und unter einer inneren Mantelschicht (2) angeordneten Zugentlastungselementen (5) sowie einem Ziehstrumpf (8), dadurch gekennzeichnet, daß der Ziehstrumpf (8) auf eine unter der abgesetzten Mantelschicht des Kabels (3) befindliche Mantelschicht (2) aufgeschoben und mit den darunter liegenden Zugentlastungselementen (5) kraftschlüssig verbunden ist, daß der Ziehstrumpf (8) im Bereich der abgemantelten Kabelseele mit den freigelegten Zugentlastungselementen (5), welche als Geflecht (14) um das Zentralelement (4) angeordnet sind, mittels einer härtbaren Klebermasse verbunden ist, und daß der Ziehstrumpf (8) beim Aushärten der Klebermasse einer Zugspannung ausgesetzt ist, welche ihn so fest zusammenzieht, daß er kraftschlüssig auf der inneren Mantelschicht (2) und den um das Zentralelement (4) angeordneten Zugentlastungselementen (5) aufliegt.

2. Zugfeste Verkappung für ein Kabel nach Anspruch 1, dadurch gekennzeichnet, daß das Verhältnis der Länge der abgesetzten Mantelschicht (3) zur Länge des freigelegten Zentralelements (4) so gewählt ist, daß die Zugspannung am Ende des Ziehstrumpfes (8), welcher dort eine Zugöse aufweist, sich entsprechend der Zerreißfestigkeiten von Zugentlastungselementen (5) einerseits und Zentralelement (4) andererseits überträgt.

3. Zugfeste Verkappung für ein Kabel nach Anspruch 1 oder 2, dadurch gekennzeichnet, daß der Ziehstrumpf (8) über einem Bleimantel (2) angeordnet ist, unter welchem sich die Zugentlastungselemente (5) befinden.

4. Zugfeste Verkappung für ein Kabel nach einem der Ansprüche 1 bis 3, dadurch gekennzeichnet, daß der Ziehstrumpf (8) aus Stahldrähten besteht.

5. Verfahren zur Herstellung einer zugfesten Verkappung für ein Kabel nach einem der Ansprüche 1 bis 4, dadurch gekennzeichnet, daß vom Kabelende ein Stück der Mantelschicht (3) abgesetzt wird, wobei jedoch eine Mantelschicht (2) über den Zugentlastungselementen (5) auf einer größeren Länge erhalten bleibt, daß vom Ende des Kabels auch ein Stück dieser Mantelschicht (2) zusammen mit den Adern (13) abgesetzt und das Zentralelement (4) freigelegt wird, daß die Kabelseele (1) mit selbstvulkanisierendem Klebeband (6) gegen eindringende Klebermasse abgedichtet wird, daß die Zugentlastungselemente (5) im Kreuzschlag um das Zentralelement (4) gelegt und fixiert werden, daß der Übergang zwischen der Mantelschicht (2) und den Zugentlastungselementen (5) mit selbstvulkanisierendem Klebeband (7) gegen Klebermasse abgedichtet wird, daß der Ziehstrumpf (8) über die geflochtenen Zugentlastungselemente (5) und die Mantelschicht (2) montiert wird, daß im Bereich der Ziehstrumpföffnung dieser mit Klebeband (9) auf der Mantelschicht (2) befestigt wird, daß ein Kittring (10) auf das Ende der abgesetzten Mantelschicht (2) aufgebracht wird, daß eine Gießform (11) bis zum Kittring (10) auf das Kabelende aufgeschoben wird, daß eine Vergußmasse in die Gießform (11) eingefüllt wird und dort zum Aushärten gebracht wird, daß gleichzeitig der Ziehstrumpf (8) stramm gezogen wird, so daß er nicht über die Mantelschicht (2) rutscht, daß die Gießform (11) nach dem Aushärten der Gießmasse (12) entfernt wird, daß der Kitt (10) entfernt wird, und daß die Verkappung mittels eines Schrumpfschlauches auf der gesamten Länge abgedichtet wird.

## Claims

1. Tensile-stress resistant cap for a cable having a cable core assembly (1) with a tensile-stress resistant central element (4) and strain relief elements (5) arranged below an inner sheath layer (2) and also a cable grip (8), characterized in that the cable grip (8) is pushed on to a sheath layer (2) located below the stripped-back sheath layer of the cable (3) and is frictionally bonded to the strain-relief elements (5) lying therebelow, in that the cable grip (8), in the region of the sheath-stripped assembly, is bonded by means of a curable adhesive composition to the exposed strain-relief elements (5) which are arranged as a braiding (14) around the central element (4) and in that the cable grip (8), during curing of the adhesive composition, is subjected to a tensile stress which contracts it so intensively that it bears in a frictionally connected manner against the inner sheath layer (2) and against the strain-relief elements (5) arranged around the central element (4).

2. Tensile-stress resistant cap for a cable according to Claim 1, characterized in that the ratio of the length of the stripped-back sheath layer (3) to the length of the exposed central element (4) is chosen such that the tensile stress at the end of the cable grip (8) which has a pull lug there is transmitted corresponding to the tearing strengths of strain-relief elements (5) on the one hand and of central element (4) on the other hand.

3. Tensile-stress resistant cap for a cable according to Claim 1 or 2, characterized in that the cable grip (8) is arranged over a lead sleeve (2) under which the strain-relief elements (5) are located.

4. Tensile-stress resistant cap for a cable according to one of Claims 1 to 3, characterized in that the cable grip (8) consists of steel wires.

5. Process for producing a tensile-stress resistant cap for a cable according to one of Claims 1 to 4, characterized in that a piece of the sheath layer (3) is stripped back from the cable end, a sheath layer (2) over the strain-relief elements (5) being, however, retained over a relatively long length, in that a piece of this sheath layer (2) together with the cores (13) is stripped back from the end of the cable and the central element (4) is exposed, in that the cable core assembly (1) is sealed by means of self-vulcanizing adhesive tape (6) against penetrating adhesive composition, in that the strain-relief elements (5) are crosslaid around the central element (4) and fixed, in that the transition between the sheath layer (2) and the strain-relief elements (5) is sealed against adhesive composition by means of self-vulcanizing adhesive tape (7), in that the cable grip (8) is fitted over the braided strain-relief elements (5) and over the sheath layer (2), in that, in the region of the cable grip aperture, the cable grip is fastened by means of adhesive tape (9) on the sheath layer (2), in that a cement ring (10) is applied to the end of the stripped-back sheath layer (2), in that a casting mould (11) is pushed onto the cable end as far as the cement ring (10), in that a casting composition is filled into the casting mould (11) and there cured, in that the cable grip (8) is at the same time pulled tightly so that it does not slip over the sheath layer (2), in that the casting mould (11) is removed after the casting composition (12) is cured, in that the cement (10) is removed and in that the cap is sealed over the entire length by means of a shrink tube.

## Revendications

1. Capuchon, résistant à la traction, pour un câble comportant une âme de câble (1) avec un élément central (4) résistant à la traction et des éléments (5) de décharge de la traction disposés sous une gaine intérieure (2), ainsi qu'un grip de tirage (8), capuchon caractérisé par le fait que l'on enfile le grip de tirage (8) sur une gaine (2) qui se trouve sous l'enveloppe décolletée du câble (3) et qu'au moyen d'une masse adhésive durcissable on relie, par serrage en pression, ce grip avec les éléments (5) de décharge de la traction située par-dessous, et par le fait que lors du durcissement de la masse adhésive, on exerce sur le grip de tirage (8) une contrainte de traction qui le resserre suffisamment pour qu'il repose, par serrage en pression, sur la gaine intérieure (2) et sur les éléments (5) de décharge de la traction disposés autour de l'élément central (4).

2. Capuchon résistant à la traction, pour un câble selon la revendication 1, caractérisé par le fait que l'on choisit le rapport entre la longueur de l'enveloppe décolletée (3) et la longueur de l'élément central libéré (4) de façon que la contrainte de traction à l'extrémité du grip de tirage (8), qui présente un oeillet de tirage, soit transmise en fonction de la résistance à la rupture des éléments (5) de décharge de la traction d'une part et de l'élément central (4) d'autre part.

3. Capuchon, résistant à la traction, pour un câble selon la revendication 1 ou 2, caractérisé par le fait que l'on dispose le grip de tirage (8) par-dessus une gaine de plomb (2) sous laquelle se trouvent les éléments (5) de décharge de la traction.

4. Capuchon, résistant à la traction, pour un câble selon l'une des revendications 1 à 3, caractérisé par le fait que le grip de tirage (8) est constitué de fils d'acier.

5. Procédé de réalisation d'un capuchon résistant à la traction pour un câble selon l'une des revendications 1 à 4, caractérisé par le fait qu'à partir de l'extrémité du câble on décollette un morceau de l'enveloppe (3), étant précisé toutefois que l'on conserve sur une assez grande longueur une gaine (2) située au-dessus des éléments (5) de décharge de la traction, par le fait qu'à partir de l'extrémité du câble on décollette également un morceau de cette gaine (2) ainsi que les fibres optiques (13), libérant ainsi l'élément central (4), par le fait que l'on rend étanche l'âme du câble (1), à l'égard d'une pénétration de la masse adhésive, au moyen d'un ruban adhésif autovulcanisant (6), par le fait que l'on applique, à torons croisés, les éléments (5) de décharge de la traction autour de l'élément central (4) et qu'on les y fixe, par le fait que l'on rend étanche, à l'égard de la masse adhésive, au moyen d'un ruban adhésif autovulcanisant (7), la transition entre la gaine (2) et les éléments (5) de décharge de la traction, par le fait que l'on monte le grip de tirage (8) au-dessus des éléments (5) de décharge de la traction, tressés, et au-dessus de la gaine (2), par le fait que dans la zone de l'ouverture pour le grip de tirage, on fixe celui-ci sur la gaine (2) au moyen du ruban adhésif (9), par le fait que l'on rapporte une bague de masticage (10) sur l'extrémité de la gaine décolletée (2), par le fait que, sur l'extrémité du câble, on enfile un moule (11) jusqu'à la bague de masticage (10)_{,} par le fait que l'on remplit le moule (11) d'une masse de scellement et qu'on l'amène au durcissement, par le fait que, simultanément, on tire sur le grip de tirage (8) pour le tendre suffisamment pour qu'il ne glisse pas le long de la gaine (2), par le fait qu'après durcissement de la masse de scellement (12), on enlève le moule (11), par le fait que l'on enlève la bague (10) et par le fait que l'on rend étanche le capuchon sur toute sa longueur au moyen d'une gaine rétractable.
